# EUROPEAN PATENT APPLICATION

(11) **EP 2 058 959 A1**
(43) Date of publication of application: **13.05.2009**
(21) Application number: 07800770.5
(22) Date of filing: 23.08.2007
(51) Int. Cl.: H04B 10/08

(54) **AN APPARATUS AND METHOD FOR DETECTING TIME SLOT COLLISION BETWEEN OPTICAL NETWORK UNITS IN OPTICAL NETWORK**

(30) Priority: 24.08.2006 CN 200610030432
(71) Applicant: Alcatel Lucent, 75008 Paris (FR)
(72) Inventor: QI, Jiang, Shanghai 201206 (CN); YU, Hongbin, Shanghai 201206 (CN); NIZAM, Mohamed, Shanghai 201206 (CN); LI, Qiang, Shanghai 201206 (CN)
(74) Representative: BiiP cvba
(86) International application number: PCT/CN2007/002550
(87) International publication number: WO 2008/031328

(57) **Abstract**

The objective of the present invention is to provide a solution for detecting timeslot conflict between Optical Network Units (ONUs) in an Optical Line Terminal (OLT). When all ONUs are deactivated and there is still any light signal in the upstream, each ONU is notified to switch off the power supply of its transmitter one by one to detect whether there is any failure ONU; when all ONUs are deactivated and there is no light signal in the upstream, the failed ONU can be located through ranging the ONUs separately. The solution can be implemented through software update, without affecting the intrinsic hardware design.

## Description

### FIELD OF THE INVENTION

The present invention relates to the field of optical communication network, and more particularly to an apparatus and method for detecting transmitter faults of or timeslot conflict between Optical Network Units (OUNs).

### BACKGROUND OF THE INVENTION

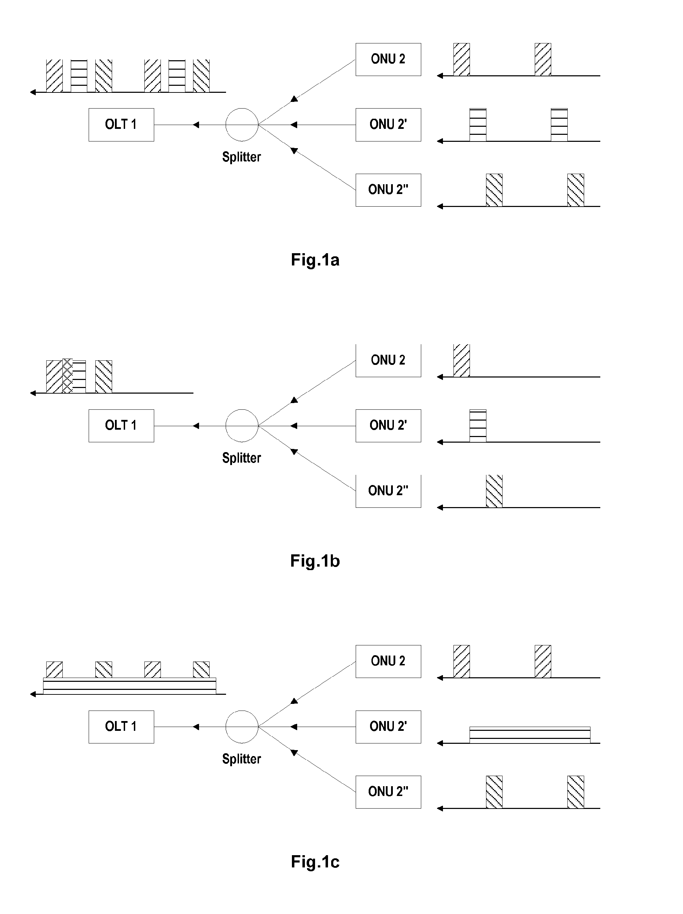

Today, Passive Optical Network (PON) is regarded as the best candidate of optical access network because of its high reliability, high bandwidth and lower implementation, and operating, administrating and maintaining (OAM) cost. As shown in Fig. 1a, PON is a typical point to multipoint network, where all optical network units share the same fiber on both upstream and downstream. Since multiple Optical Network Units (ONUs) connect to one Optical Line Terminal (OLT), a shared time-domain multiplexing (TDM) channel is used by all ONUs in the downstream direction. In the upstream direction a time-domain multiple access (TDMA) approach is used to allow each ONU to transmit its traffic during its dedicated timeslot.

Timeslot conflict means that in the upstream, there is an overlapped part between the sub-frames from different ONUs, and this conflict could not be modified by equalization delay. Generally, the following two cases will result in the timeslot conflict:
1) The ONU's laser switching off time is out of allowable scope because of the laser aging or other reasons. As shown in Fig. 1b, if the laser switching off time of ONU 2 is out of the scope, a conflict will happen between sub-frames from ONU 2 and ONU 2'. The red column marks the conflicting area, and this conflict could not be corrected via the normal modified equalization delay.
2) The ONU laser is constantly emitting, which can be induced by the laser failure or malicious ONU configuration. As shown in Fig. 1c, the laser of ONU 2' is stuck on the "emitting" state, and therefore all other ONUs' upstream sub-frames will be overlapped this background light signal when arriving at the OLT. This fault could possibly result in deterioration or even a complete blockage of upstream data transmission to OLT 1 This blockage remains until the defective ONU is identified and repaired or replaced.

Detecting all these conflicting cases described hereinabove in physical layer is very difficult or even impossible, since the conflicting length could vary from 0.4ns (2.4gbps, one bit) to very long (more than several seconds), at the same time, the conflicting signal amplitude could be less than 1% comparing with the received optical power (received optical power in OLT from different ONUs could vary 22dB). It is impossible to detect optical signal fluctuation with such low amplitude within such a short period.

Reference 2 (US patent application of invention No. 2004/0156635), entitled "Method and apparatus for the transmission fault detection in an access network", discloses that a secondary modulation sub-system is added to impress an ONU identifier onto the optical carrier, wherein the ONU identifier serves to identify the ONU to OLT which monitors the upstream channel. The secondary modulation sub-system may include a tone source. The channel identifier generated by the tone source can be used as the ONU identifier, and it may be generated by modulating the channel.

The major disadvantages of Reference 2 are listed as follows:
1) A new transmitter is required, which includes a secondary modulation sub-system in ONU side and a demodulation sub-system in OLT side, which increases implementation complexity and cost;
2) The additional modulation pattern induces more rigorous limitation on the transmitter's linearity, and extra performance loss comprising efficiency descending in different scenes shown in Reference 2;
3) When the laser fails, the secondary modulation sub-system is possibly unable to impress the ONU identifier on the optical carrier.

In one word, the scheme shown in Reference 2 must bring a big modification on current hardware architecture, and its validity should be studied.

### SUMMARY OF THE INVENTION

G.984 series have defined several parameters for ONU link performance monitoring such as Lost of Frame (LOF), Drift of Window (DOW), Signal Degrade (SD), Signal Failure (SF) and errors. Meanwhile, the link bit error rate (BER) could be evaluated through the bit interleaved parity (BIP) calculation.

The object of the present invention is to provide a new technical solution which uses the messages in the above standards to detect timeslot conflict between ONUs and identify failed ONUs. This solution can be implemented through software update, without affecting the original hardware design.

To avoid "switching off laser" failure, there is proposed a design with separated ONU transmitter power supply, and the updated control messages are also given.

According to a first aspect of the present invention, there is provided a method for detecting the failure of a transmitter in an Optical Network Unit (ONU) in an Optical Line Terminal (OLT) in a Passive Optical Network (PON), comprising: at first, when all ONUs are deactivated and there is still light signal in the upstream, notifying each ONU to switch off the power supply of its transmitter one by one; and then determining whether a corresponding ONU fails by detecting whether there is any light signal in the upstream after each ONU is notified to switch off the power supply of its transmitter.

According to a second aspect of the present invention, there is provided a failure detection apparatus for detecting the failure of a transmitter in an Optical Network Unit (ONU) in an Optical Line Terminal (OLT) in a Passive Optical Network (PON), comprising switching off notification means and switching off detection means, wherein the switching off notification means is used for notifying each ONU to switch off the power supply of its transmitter one by one when all ONUs are deactivated and it is detected that there is still any light signal in the upstream; and the switching off detection means is used for determining whether a corresponding ONU fails by detecting whether there is any light signal in the upstream after each ONU is notified to switch off the power supply of its transmitter.

According to a third aspect of the present invention, there is provided a method for detecting timeslot conflict between Optical Network Units (ONUs) in an Optical Line Terminal (OLT) in a Passive Optical Network (PON), comprising: when all ONU are deactivated and there is no light signal in the upstream, notifying each ONU to activate one by one; and after each ONU is activated, ranging light signals sent therefrom separately; and after ranging the light signals sent from each ONU, determining whether ranged results are correct.

According to a fourth aspect of the present invention, there is provided a conflict detection apparatus for detecting timeslot conflict between Optical Network Units (ONUs) in an Optical Line Terminal (OLT) in a Passive Optical Network (PON), comprising activating notification means, ranging means and determining means. The activating notification means is used for notifying each ONU to activate one by one when all ONU are deactivated and there is no light signal in the upstream; the ranging means is used for ranging the light signals sent from each ONU separately after they are activated; the determining means is used for determining whether ranged results are correct after ranging the light signals sent from each ONU.

According to a fifth aspect of the present invention, there is provided a method for detecting timeslot conflict in an Optical Network Unit (ONU) in a Passive Optical Network (PON), comprising: receiving from an Optical Line Terminal (OLT) a message for notifying of switching off a separate power supply of the transmitter in the ONU; switching off the separate power supply of the transmitter based on the message for notifying of switching off the separate power supply of the transmitter in the ONU.

According to the sixth aspect of the present invention, there is provided an Optical Network Unit (ONU) for detecting timeslot conflict in a Passive Optical Network (PON), comprising a separate power supply for powering a transmitter, receiving means and switching off means. The receiving means is used for receiving from an Optical Line Terminal (OLT) a message for notifying of switching off a separate power supply of the transmitter in the ONU; the switching off means is used for switching off the separate power supply of the transmitter based on the message for notifying of switching off the separate power supply of the transmitter in the ONU.

The present invention has the following advantages compared with the prior art:

As detecting all timeslot conflicts in the physical layer is very difficult or even impossible, the present invention provides a novel detecting scheme, which only utilizes current available link monitoring information and can be realized by software update.

To avoid switching off ONU laser failure, the design with separate power supply of transmitter is described and modified deactivating message is also proposed for the design.

### BRIEF DESCRIPTION ON THE DRAWINGS

Other features, objects and advantages of the present invention will become more apparent through reading the detailed description of non-limiting embodiments with reference to the figures.
Fig. 1a is a diagram illustrating a network structure topology between the OLT and ONUs in a PON according to one specific embodiment of the present invention;
Fig. 1b is a schematic diagram illustrating a scene where the switching off time of a transmitter of an ONU in the PON is out of the allowable scope according to one specific embodiment of the present invention;
Fig. 1c is a schematic diagram illustrating a scene where the transmitter of an ONU in the PON is stuck on the "emitting" state according to one specific embodiment of the present invention;
Fig. 2 is a flowchart illustrating a method for detecting timeslot conflict between ONUs in the OLT in the PON according to one specific embodiment of the present invention;
Fig. 3 is a schematic block diagram of a detection apparatus for detecting timeslot conflict between ONUs in the OLT in the PON according to one specific embodiment of the present invention;
Fig. 4 is a flowchart illustrating a method for detecting timeslot conflict in the ONU in the PON according to one specific embodiment of the present invention;
Fig. 5 is a schematic block diagram illustrating an ONU for detecting timeslot conflict in the PON according to one specific embodiment of the present invention.

### Description of the Preferred Embodiments

### Separate Power Supply Design

For most deactivate failures of ONUs, the corresponding transmitter goes into an error state and the laser could not be switched off or on by a controlling signal. To avoid the failure completely, a solution of a separate power supply is proposed (a lot of commercial power regulators supporting this function such as LT1762). The power supply of the transmitter in the ONU could be switched off by the OLT via sending a Deactivate ONU_ID message. The updated deactivating message is shown as follows.

**Table 1: Format of Deactivate ONU_ID Message**

| Deactivate ONU_ID Message | | |
|---|---|---|
| OCtet | Content | Description |
| 1 | ONU-ID or 11111111 | The message is directed to one ONU or all ONUs. If the message is broadcasted to all ONUs, then ONU_ID=oxFF. |
| 2 | 00000101 | Message identifier "Deactivate ONU_ID" |
| 3 | 0000000b | '0'-switch on the transmitter power supply '1'-switch off the transmitter power supply |
| 4∼12 | Unspecified | |

As a transmitter and a receiver are often integrated into one transceiver module and use the same power supply, switching off the power supply of the transmitter would also switch off the power supply of the receiver, which would result in the ONU unable to receive messages from the OLT again. At the moment, the ONU could not be restarted by OLT commands and only be reset manually, so this action is only used for the serious error: deactivate failure.

In G.984/G.983 series standards, the optical fiber link performance monitoring is carried out via bit interleaved parity (BIP) checksum. An error counter is used to totalize the BIP errors. If the Bit Error Rate (BER) of the corresponding ONU is up to the predefined threshold, signal degrade/failure alarm would be triggered. When the conflict occurs or the signal degrades further, an ONU delimiter would not be recognized, which would result in the generation of Lost of Frame (LOF) signal.

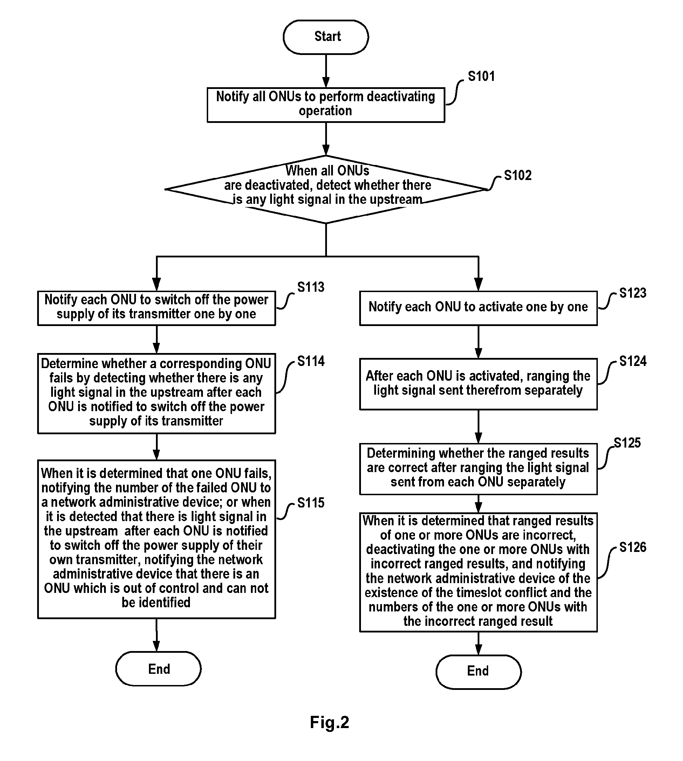

The present invention will be further described in detail in combination with Figs. 2-5.

Fig. 2 is a flowchart illustrating a method for detecting timeslot conflict between ONUs in the OLT in the PON according to one specific embodiment of the present invention.

Two major scenes which would result in timeslot conflict have been described above. The first scene would likely result in the lost of one or more ONU frame delimiters, and the second scene may lead to other ONU BER degrade, signal failure, signal degrade or even the LOF. So, when N ONUs generate the LOF or signal failure alarms or N ONUs' Parity Errors increase abnormally within M consecutive frams, OLT would switch from state 1 to state 2 and the values of M and N used herein can be configured by a network administration device.

When timeslot conflict occurs, all ONUs are notified of performing the deactivating operation in step S101; when all ONUs are deactivated, it is detected in step S102 whether there is any light signal in the upstream.

When all ONUs are deactivated and there is light signal in the upstream, each ONU is notified in step S113 of switching off the power supply of its transmitter which can be performed by sending a switching off notification through the updated deactivating message described above.

And then, in step S114, it is determined whether a corresponding ONU fails by detecting whether there is any light signal in the upstream after each ONU is notified to switch off the power supply of its transmitter.

Later, in step S115, when it is determined that one ONU fails, the ONU number of the failed ONU is notified to the network administrative device; or when each ONU is notified to switch off the power supply of their own transmitter and there is light signal in the upstream, the network administrative device is notified that there is an ONU which is out of control and can not be identified.

The determination of failed ONU in step S115 described herein means that the Kth ONU is deemed as failed when the light signal in the upstream disappears after the power supply of the transmitter of the Kth ONU is switched off. If there exist multiple failed ONUs, each time only the failed ONU which is switched off lastly can be detected from steps S101 to S115, and then the above steps S101-115 are repeated to find the failed ONUs one by one.

When all ONU are deactivated and there is no light signal in the upstream, each ONU is notified to activate in step S123 one by one.

After each ONU is activated, the light signals sent therefrom are ranged in step S124.

After the light signals sent from each ONU are ranged separately, it is determined whether the ranged results are correct in step S125. If the ranged result of one ONU indicates that the sub-frame length of the light signal of the ONU exceeds a first predefined scope and/or the Drift of Window (DOW) of the sub-frame exceeds a second predefined scope, it is determined that the ranged result is incorrect.

And then, in step S126, when it is determined that the ranged results of one or more ONUs are incorrect, the one or more ONUs with incorrect ranged results are deactivated, and the network administrative device is notified of the existence of timeslot conflict and the numbers of the one or more ONUs with incorrect ranged results.

It should be noted that steps S101-S115 can be a separate technical solution for detecting whether a transmitter of an ONU fails; and steps S101-S126 can be a separate solution for detecting whether there is any timeslot conflict between ONUs. When the transmitter of the ONU fails and/or there is timeslot conflict between ONUs, the situation that sub-frames from different ONUs are overlapped in the time domain can be seen at the OLT, and thus the above two separate solutions can be used in combination.

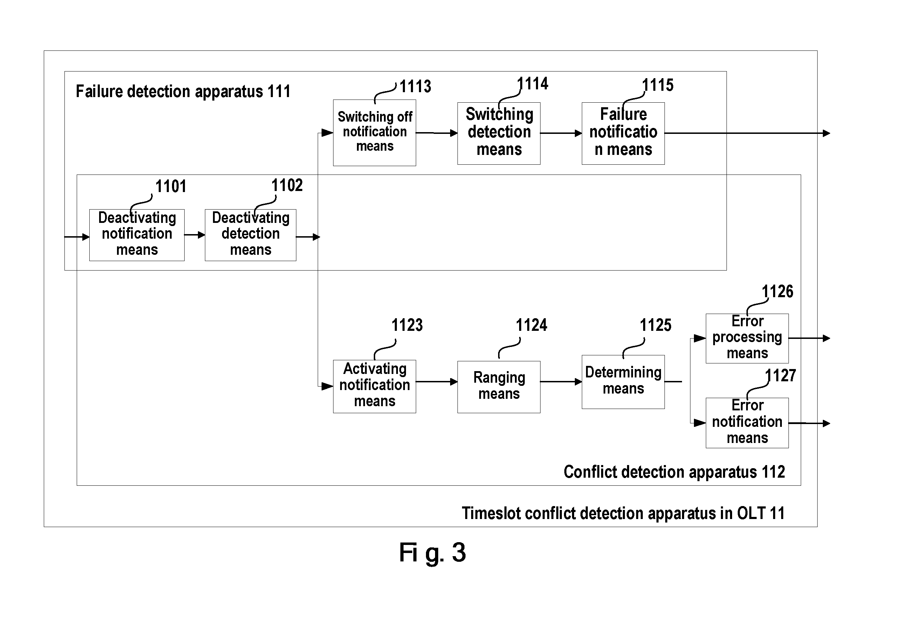

Fig. 3 is a schematic block diagram of a detection apparatus for detecting timeslot conflict between ONUs in the OLT in the PON according to one specific embodiment of the present invention. The timeslot conflict detection apparatus 11 comprises a failure detection apparatus 111 and a conflict detection apparatus 112.

The failure detection apparatus 111 comprises deactivating notification means 1101, deactivating detection means 1102, switching off notification means 1113, switching off detection means 1114 and failure notification means 1115.

The deactivating notification means 1101 notifies all ONUs of the deactivating operation in the case of the existence of timeslot conflict. After all ONUs are deactivated, the deactivating detection means 1102 detects whether there is any light signal in the upstream. When all ONUs are deactivated and there is light signal in the upstream, the switching off notification means 113 notifies each ONU of switching off the power supply of its transmitter which can be performed by sending a switching off notification through the updated deactivating message described above. The switching off detection means 1114 determines whether a corresponding ONU fails by detecting whether there is any light signal in the upstream after each ONU is notified to switch off the power supply of its transmitter. When it is determined that one ONU fails, the failure notification means 1115 notifies the ONU number of the failed ONU to the network administrative device; or when each ONU is notified to switch off the power supply of their own transmitter and there is light signal in the upstream, the failure notification means 1115 notifies the network administrative device that there is an ONU which is out of control and can not be identified.

The determination of the failed ONU by the switching off detection means 1114 described herein means that the Kth ONU is deemed as failed when the light signal in the upstream disappears after the power supply of the transmitter of the Kth ONU is switched off. If there exist multiple failed ONUs, each time only the failed ONU which is switched off lastly can be detected, and then the detection is repeated to find the failed ONUs one by one.

The conflict detection apparatus 112 comprises deactivating notification means 1101, deactivating detection means 1102, activating notification means 1123, ranging means 1124, determination means 1125, error processing means 1126 and error notification means 1127.

The deactivating notification means 1101 notifies all ONUs of the deactivating operation. After all ONUs are deactivated, the deactivating detection means 1102 detects whether there is any light signal in the upstream. When all ONU are deactivated and there is no light signal in the upstream, the activating notification means 1123 notifies each ONU to activate one by one. After each ONU is activated, the ranging means 1124 ranges the light signals sent therefrom. After the light signals sent from each ONU are ranged separately, the determination means 1125 determines whether the ranged results are correct. If the ranged result of one ONU indicates that the sub-frame length of the light signal of the ONU exceeds a first predefined scope and/or the Drift of Window (DOW) of the sub-frame exceeds a second predefined scope, it is determined that the ranged result is incorrect. When it is determined that the ranged results of one or more ONUs are incorrect, the error processing means 1126 deactivates the one or more ONUs with incorrect ranged results. When it is determined that the ranged results of one or more ONUs are incorrect, the error notification means 1127 notifies the network administrative device of the existence of timeslot conflict and the numbers of the one or more ONUs with incorrect ranged results.

It should be noted that the failure detection apparatus 111 can be a separate apparatus for detecting whether a transmitter of an ONU fails; and the conflict detection apparatus 112 can be a separate apparatus for detecting whether there is any timeslot conflict between ONUs. When the transmitter of the ONU fails and/or there is any timeslot conflict between ONUs, the situation that sub-frames from different ONUs are overlapped in the time domain can be seen at the OLT, and thus the above two separate apparatuses can be used in combination.

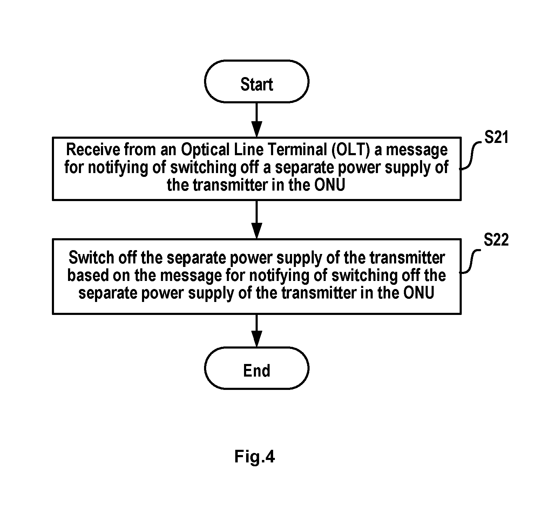

Fig. 4 is a flowchart illustrating a method for detecting timeslot conflict in an ONU in the PON according to one specific embodiment of the present invention.

In step S21, it is received from the OLT a message for notifying of switching off the separate power supply of the transmitter in the ONU; in step S22, the separate power supply of the transmitter is switched off based on the message for notifying of switching off the separate power supply of the transmitter in the ONU.

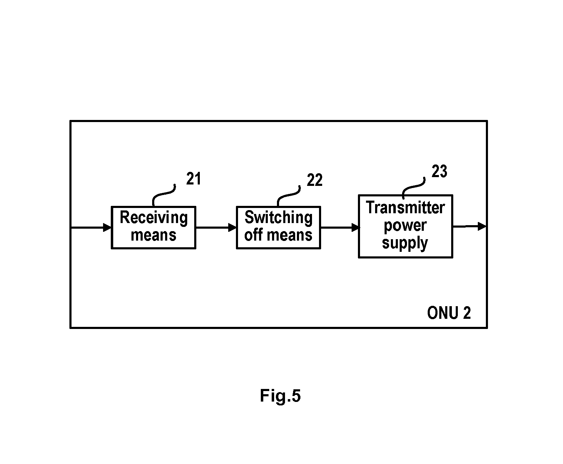

Fig. 5 shows a schematic block diagram of ONU 2 for detecting timeslot conflict in the PON according to one specific embodiment of the present invention, wherein the ONU 2 comprises receiving means 21, switching off means 22 and a separate transmitter power supply 23. The receiving means 21 is for receiving from the OLT 1 a message for notifying of switching off the separate power supply 23 of the transmitter in the ONU 2; the switching off means 22 is for switching off the separate power supply 23 of the transmitter based on the message for notifying of switching off the separate power supply 23 of the transmitter in the ONU 2.

The specific embodiments of the present invention have been described above. It should be appreciated that the present invention is not limited to the specific embodiments, and those skilled in the art can make various variation or modifications within the scope of the appended claims.

## Claims

1. A method for detecting the failure of a transmitter in an Optical Network Unit (ONU) in an Optical Line Terminal (OLT) in a Passive Optical Network (PON), comprising:
c. when all ONUs are deactivated and there is still light signal in the upstream, notifying each ONU to switch off the power supply of its transmitter one by one;
d. determining whether a corresponding ONU fails by detecting whether there is any light signal in the upstream after each ONU is notified to switch off the power supply of its transmitter.

2. The method of claim 1, before step c further comprising:
a. notifying the ONUs of performing the deactivating operation;
b. when all ONUs are deactivated, detecting whether there is any light signal in the upstream.

3. The method of claim 1 or 2 further comprising:
when it is determined that one ONU fails, notifying a network administrative device of the number of the failed ONU.

4. The method of anyone of claim 1-3 further comprising:
when each ONU is notified to switch off the power supply of their own transmitter and it is detected that there is light signal in the upstream, notifying the network administrative device that there is a failed ONU which is out of control and can not be identified.

5. A failure detection apparatus for detecting the failure of a transmitter in an Optical Network Unit (ONU) in an Optical Line Terminal (OLT) in a Passive Optical Network (PON), comprising:
switching off notification means, for notifying each ONU to switch off the power supply of its transmitter one by one when all ONUs are deactivated and it is detected that there is still light signal in the upstream;
switching off detection means, for determining whether a corresponding ONU fails by detecting whether there is any light signal in the upstream after each ONU is notified to switch off the power supply of its transmitter.

6. The apparatus of claim 5 further comprising:
deactivating notification means for notifying all ONUs of deactivating operation;
deactivating detection means for detecting whether there is any light signal in the upstream after all ONUs are deactivated.

7. The apparatus of claim 5 or 6 further comprising:
failure notification means for notifying a network administrative device of the number of the failed ONU when it is determined that one ONU fails.

8. The apparatus of anyone of claims 5-7, wherein the failure notification means is further used for:
when each ONU is notified to switch off the power supply of their own transmitter and it is detected that there is light signal in the upstream, notifying the network administrative device that there is a failed ONU which is out of control and can not be identified.

9. A method for detecting timeslot conflict between Optical Network Units (ONUs) in an Optical Line Terminal (OLT) in a Passive Optical Network (PON), comprising:
iii. when all ONU are deactivated and there is no light signal in the upstream, notifying each ONU to activate one by one;
iv. after each ONU is activated, ranging light signals sent therefrom separately,
v. after ranging the light signals sent from each ONU, determining whether ranged results are correct.

10. The method of claim 9, before step iii further comprising:
i. notifying all ONUs of performing deactivating operation;
ii. when all ONUs are deactivated, detecting whether there is any light signal in the upstream.

11. The method of claim 9 or 10 further comprising:
vi. when it is determined that the ranged results of one or more ONUs are incorrect, deactivating the one or more ONUs with incorrect ranged results, and notifying a network administrative device of the existence of timeslot conflict and the numbers of the one or more ONUs with incorrect ranged results.

12. The method of anyone of claim 9-11, wherein the step v comprises:
when the ranged result of one ONU indicates that the sub-frame length of the light signal of the ONU exceeds a first predefined scope and/or the Drift of Window of the sub-frame exceeds a second predefined scope, determining that the ranged result is incorrect.

13. A conflict detection apparatus for detecting timeslot conflict between Optical Network Units (ONUs) in an Optical Line Terminal (OLT) in a Passive Optical Network (PON), comprising:
activating notification means for notifying each ONU to activate one by one when all ONUs are deactivated and there is no light signal in the upstream;
ranging means for ranging the light signals sent from each ONU separately after they are activated;
determining means for determining whether ranged results are correct after ranging the light signals sent from each ONU.

14. The conflict detection apparatus of claim 13 further comprising:
deactivating notification means for notifying all ONUs of deactivating operation.
deactivating detection means for detecting whether there is any light signal in the upstream after all ONUs are deactivated.

15. The conflict detection apparatus of claim 13 or 14 further comprising:
error processing means for deactivating the one or more ONUs with incorrect ranged results when it is determined that the ranged results of the one or more ONUs are incorrect;
error notification means for notifying a network administrative device of the existence of timeslot conflict and the numbers of the one or more ONUs with incorrect ranged results when it is determined that the ranged results of one or more ONUs are incorrect.

16. The conflict detection apparatus of anyone claim 13-15, wherein
the determining means is further used for determining that the ranged result is incorrect when the ranged result of one ONU indicates that the sub-frame length of the light signal of the ONU exceeds a first predefined scope and/or the Drift of Window of the sub-frame exceeds a second predefined scope.

17. An Optical Line Terminal (OLT) of a Passive Optical Network (PON) comprising a failure detection apparatus for detecting the failure of a transmitter of an Optical Network Unit (ONU) according to anyone of claims 5-8 and/or a conflict detection apparatus according to anyone of claims 13-16.

18. A method for detecting timeslot conflict in an Optical Network Unit (ONU) in a Passive Optical Network (PON), comprising:
receiving from an Optical Line Terminal (OLT) a message for notifying of switching off a separate power supply of the transmitter in the ONU;
switching off the separate power supply of the transmitter based on the message for notifying of switching off the separate power supply of the transmitter in the ONU.

19. An Optical Network Unit (ONU) for detecting timeslot conflict in a Passive Optical Network (PON), comprising:
a separate power supply for powering a transmitter;
receiving means for receiving from an Optical Line Terminal (OLT) a message for notifying of switching off the separate power supply of the transmitter in the ONU;
switching off means for switching off the separate power supply of the transmitter based on the message for notifying of switching off the separate power supply of the transmitter in the ONU.
